# EUROPÄISCHE PATENTSCHRIFT

(11) **EP 3 249 335 B1**
(45) Veröffentlichungstag und Bekanntmachung des Hinweises auf die Patenterteilung: **03.03.2021**
(21) Anmeldenummer: 17173081.5
(22) Anmeldetag: 26.05.2017
(51) Int. Cl.: F28D 20/02, F28D 20/00

(54) **LATENTSPEICHERELEMENT, VERKAPSELUNG FÜR EIN LATENTSPEICHERMATERIAL UND LATENTSPEICHER**
LATENT MEMORY ELEMENT, ENCAPSULATION FOR A LATENT HEAT STORAGE MATERIAL AND LATENT STORAGE
ÉLÉMENT D'ACCUMULATEUR DE CHALEUR LATENTE, ENCAPSULATION POUR UN MATÉRIAU À CHALEUR LATENTE ET ACCUMULATEUR DE CHALEUR LATENTE

(30) Priorität: 27.05.2016 DE 102016109825; 27.05.2016 DE 102016109827
(43) Veröffentlichungstag der Anmeldung: 29.11.2017
(73) Patentinhaber: Axiotherm GmbH, 07607 Eisenberg (DE)
(72) Erfinder: BÜTTNER, Dirk Carsten, 12207 Berlin (DE); LAUBE, Andreas Olaf, 15517 Fürstenwalde (DE); SCHMITZ, Egon Michael, 04105 Leipzig (DE)
(74) Vertreter: Hecht, Jan-David

(56) Entgegenhaltungen:
- EP-A1- 2 657 629
- EP-A2- 2 492 119
- WO-A2-2012/138978
- JP-A- H1 089 821

## Beschreibung

Die vorliegende Erfindung betrifft ein Latentspeicherelement nach dem Oberbegriff von Anspruch 1 und einen Latentspeicher nach dem Oberbegriff von Anspruch 13.

Derzeit werden immer mehr Anstrengungen unternommen, Energie effizienter zu nutzen. Bisher kann man mit Hilfe von endlichen Ressourcen (Öl, Kohle etc.) oder auslaufenden Modellen (Kernkraft) zu jeder Zeit "on demand" über genügend Energie verfügen. Dieser Luxus geht jedoch zu Lasten der Umwelt und es müssen unnötig große Kraftwerksleistungen vorgehalten werden. Die CO₂-Emissionen steigen und weitere schwer umweltbetastende Faktoren durch Gewinnung, Transport und Entsorgung dieser Energieträger sind die Folge.

Zwar verfügen Industriestaaten daher über genügend Energie, allerdings besteht das Problem, dass Angebot und Nachfrage oftmals zeitlich verschoben sind. Diese Verschiebung kann wenige Minuten (z.B. für Produktionsprozesse) bis hin zu mehreren Stunden betragen. Ein Beispiel für letzteres ist die Solarthermie, die tagsüber für ihre Wärmeangebote kaum eine direkte Abnahme findet, aber in der Nacht sehr begehrt ist.

Durch die in Deutschland geförderte "Energiewende" besteht außerdem eine Vielzahl volatiler Energieerzeuger (elektrisch, thermisch).

Um die derzeit durch die Energieerzeuger bereit gestellten Energien optimal nutzen zu können, ist eine effiziente Speicherung dieser Energie unabdingbar. Vor allem gilt dies im Bereich der thermischen Energie, mit der die vorliegende Erfindung befasst ist. Gleichwohl kann die Erfindung dann auch in anderen Energiesektoren sinnvoll eingesetzt werden, wenn dort thermische Energie entweder als "Abfallprodukt" anfällt bzw. gezielt durch Umwandlung erzeugt wird.

Bislang werden hauptsächlich große Wassertanks als Speicher für thermische Energie (thermische Speicher) eingesetzt. Das ist dann sinnvoll, wenn es gilt, mit großen Temperaturdifferenzen zu arbeiten. Wenn z. B. in einem Wassertank 90grädiges Wasser eingelagert wird und beim Verbraucher bis auf z. B. 30 °C genutzt wird, ist das eine sehr große Temperaturdifferenz von 60K. Bei so großen Temperaturhüben kann ein solcher Wasser-Speicher (sensibler Speicher) nicht durch sinnvolle Alternativen ersetzen werden. Allerdings werden Anlagen mit größeren Temperaturunterschieden immer weniger, da diese eine sehr schlechte Energieeffizienz aufweisen.

Moderne energetische Systeme arbeiten im Gegensatz dazu mit kleinen Temperaturdifferenzen. Dadurch liegen Erzeuger und Verbraucher in ihren Temperaturen sehr nahe und es muss nur das notwendige Minimum an Energie aufgebracht werden, um die verbrauchte Energie über einen kleinen Temperaturhub wieder dem Kreislauf zuzuführen. Diese effizienten Anlagen kommen mit nur noch einem Bruchteil der früher eingesetzten Primärenergie aus. Je kleiner dabei die Temperaturdifferenzen werden, desto weniger Energie können allerdings sensible Speicher einlagern. Wenn die nutzbare Temperaturdifferenz z.B. nur noch 5 K (beispielsweise ein Temperaturwechsel von 5°C auf 10 °C) beträgt, hat ein Wasserspeicher pro kg Wasser ca. 5,8 Wh eingespeichert. Zudem nimmt mit jeder Energieentnahme die Arbeitstemperaturdifferenz immer weiter ab, so dass damit gleichzeitig die Leistung sinkt. Für relativ kleine Temperaturdifferenzen sind sensible Speicher daher nicht geeignet.

Für solche kleinen Temperaturdifferenzen wurden Latentspeicher entwickelt. Diese enthalten als Latentspeichermaterial sogenannte Phasenwechselmaterialien (Phase Change Materials, kurz PCM), also Materialien, die die Eigenschaft haben, bei definierten Temperaturen (Phasenwechseltemperaturen) einen Phasenwechsel von beispielsweise fest zu flüssig oder umgekehrt zu durchlaufen (auch flüssigdampfförmig und ähnliche Systeme sind möglich, auch wenn im Folgenden nur auf den Phasenwechsel fest-flüssig eingegangen wird).

Bei einem solchen Phasenwechsel wird sehr viel thermische Energie aufgenommen (fest -> flüssig) oder abgegeben (flüssig -> fest), wobei die Temperatur des Latentspeichermaterials bei dem Phasenwechsel konstant bleibt.

Beispielsweise beträgt die Wärmekapazität von Wasser 1,16 Wh/kg*K (Erwärmung um 1 °C). Bei 5 K sind das also (5 K*1,16 Wh =) 5,8 Wh pro kg Wasser. Betrachtet man hingegen den Hauptschmelzbereich eines typischen PCM, wie dem kommerziell erhältlichem paraffinbasierten ATP 62 (besitzt eine Phasenwechseltemperatur von 62 °C) der Fa. Axiotherm, erhält man eine Einspeicherkapazität von 53 Wh pro kg PCM bei einer Temperaturdifferenz von 5K, also etwas mehr als das 9-fache pro kg im Vergleich zu Wasser. Dieser Vorteil sinkt für höhere Temperaturdifferenzen und beispielsweise beträgt das Verhältnis für 10 K Temperaturdifferenz nur noch das 5,2-fache. Diese Angaben müssen zwar je nach Anwendungsfall noch bezüglich der Dichte korrigiert werden (Paraffin-PCM haben eine Dichte von ca. 0,7-0,85 g/cm³), allerdings wird anhand dieser Werte der deutliche Vorteil von Latentspeichern bei relativ kleinen Temperaturdifferenzen gegenüber sensiblen Speichern deutlich.

Ein wesentliches Problem besteht nun derzeit in der Funktion des Latentspeichermaterials, da es aufgrund der schlechten Wärmeleitung von Latentspeichermaterialien nicht sinnvoll ist, einen Latentspeicherbehälter mit einem Latentspeichermaterial komplett zu befüllen und beispielsweise ein wasserdurchströmtes Wendelrohr in diesem Behälter anzuordnen, um so Wärme oder Kälte ein- und ausspeichern. Zwar gab es schon einige solche Ansätze, allerdings sind aufgrund physikalischen Gegebenheiten solche Ansätze stets gescheitert, da in diesen Konstruktionen die schlechte Wärmeleitfähigkeit des Latentspeichermaterials einen kontinuierlichen Energieeintrag (Einspeichern) und erst recht den kontinuierlichen Energieaustrag (Ausspeichern) verhindert. Vergleichbar ist dieser Effekt mit der Herstellung von gekochten Frühstücks-Eiern: Die im Garprozess entstehenden äußeren festen Schichten im Ei verschlechtern den Wärmeeintrag zum Kern des Eies, und nur aufgrund großer Temperaturdifferenzen und ausreichender Zeit wird eine vollständige Durchwärmung und damit Kochen des Eies erreicht. Für einen Latentspeicher bedeutet das, dass aufgrund der nur kleinen Temperaturdifferenzen eine sehr lange Zeit sowie sehr große Temperaturgradienten zum Ein- und Ausspeichern (der Kern des Eies ist noch heiß, die Schale höchstens warm) der thermischen Energie notwendig sind, andernfalls nehmen mehr oder weniger große Anteile des Latentspeichermaterials nicht am Energie speichernden bzw. abgebenden Phasenwechsel teil.

Zur Lösung dieses Problems wurden schon sogenannte Mikroverkapselungen vorgeschlagen, beispielsweise in Form kleiner Kugeln, um das Latentspeichermaterial großflächig in ein Wärmetauschermedium einzubetten. Dabei ist allerdings bei Mikroverkapselungen das Verhältnis von Verkapselungsmaterial zu Latentspeichermaterial ungünstig.

Eine bessere Lösung stellen sogenannte Makroverkapselungen dar, also Verkapselungen, die ein Volumen von zumindest ca. 0,1 cm³ aufweisen. Als Material haben sich dabei in Anbetracht von Kosten und Verarbeitungsmöglichkeiten Metall und Kunststoff durchgesetzt, wobei Metall jedoch meist wegen seiner Korrosionsanfälligkeit und Dichtungsproblemen ausscheidet.

Bei den kunststoffbasierten Makroverkapselungen wurden bis jetzt für Latentspeicherelementen, also Elementen, die ein Latentspeichermaterial enthalten und die in einem Latentspeicher angeordnet werden, diverse auf dem Markt erhältliche Kunststoffgebinde eingekauft, die entsprechende Hersteller für z. B. ganz andere Zwecke einsetzen. Hier sei als Beispiel der weitverbreitete Kühlakku (Blasformteil) genannt, der im Tiefkühler eingefroren wird und anschließend in Kühlboxen und - taschen etc. Verwendung findet, um dort beispielsweise Getränke, Lebensmittel aber auch Medikamente während eines Transports zu kühlen.

Dabei können allerdings keine notwendigen Auslegungsparameter für Latentspeicherelemente miteinander abgestimmt werden. Stattdessen produziert der Blasformteilhersteller nur nach seinen technisch/wirtschaftlich günstigsten Bedingungen und dessen Kunde füllt meist Wasser bzw. Wasser-Salz-Gemische o. ä. ein. Diese Systeme funktionieren für diese täglichen Kühlungszwecke ausreichend, da es um keine technischen Relevanzen geht.

Wenn diese Makroverkapselungen nun jedoch auch mit anderen Latentspeichermaterialien befüllt werden, um Temperaturen unterschiedlich 0°C zu realisieren, kommt es zu Problemen. In solchen Temperaturbereichen außerhalb 0°C werden nämlich hauptsächlich Paraffine und deren Derivate bzw. paraffinähnliche Stoffe sowie Salzhydrate eingesetzt. Wenn diese Latentspeichermaterialien sich in den oben beschriebenen herkömmlichen Makroverkapselungen befinden, kommt es aufgrund von zu großen Dicken (> 10-15 mm) der Verkapselung und damit des Latentspeichermaterials zu einem starken Leistungsabfall und hohen Temperaturgradienten. Das bewirkt, dass ein Latentspeichermaterial mit einer Phasenwechseltemperatur von z.B. 53 °C bei einer so dicken Paraffinschicht nur noch beispielsweise eine Oberflächentemperatur von 45 °C besitzt. Solche Verkapselungen weisen also eine zu große Latentmaterialdicke auf.

Oft werden auch Kugeln als Makroverkapselung eingesetzt. Da hier aus wirtschaftlichen Gründen das Volumen nicht zu klein sein darf, da sonst die Füllkosten pro kg Latentspeichermaterial viel zu hoch werden, kommen entsprechend große Hohlkugeln (Durchmesser bis ca. 8 cm) zum Einsatz. Diese sind thermodynamisch aufgrund vorheriger Erklärungen nicht verwendbar.

Außerdem haben sie ein Stabilitätsproblem: In größeren Schüttungen werden sie aufgrund der Lasten deformiert und bilden durch die aufeinandergedrückten Auflageflächen eine starke Verringerung der (Wärme-) Übertragungsflächen und eine immer schwerer zu durchströmende Struktur. Andere Formen wie Hohlzylinder, Tüten, Stäbe usw. zeigten die gleichen Probleme.

Zusätzlich bestehen große Probleme in Bezug auf die Verschließtechnik, also das Verfahren zum Befüllen der Markroverkapselung mit Latentspeichermaterial und der anschließende versiegelnde Verschluss der Verkapselung. Dies ist bei den genannten Bauteilen oft mit langen (Schweiß-, Klebe-, Schraub- usw.) Nähten verbunden, die auf Dauer weder wirtschaftlich noch technisch beherrschbar sind.

Ferner erreichen die Packungsdichten dieser Makroverkapselungen in Schüttungen unbefriedigende Werte, da sich geometriebedingt keine gleichmäßigen Muster ausbilden und sich so Vorzugsströmungen bilden, die zu unregelmäßigen Be- und Entladeprozessen führen.

Schließlich entstanden bis jetzt auch weitere Probleme durch zu starken Auf- bzw. Abtrieb, denn bei z.B. Paraffinen und paraffinähnlichen Stoffen liegt die Dichte mit ca. 0,7-0,85 g/cm³ weit unter der von Wasser (ca. 1,0 g/cm³). Durch diese Dichtunterschiede kam es bislang zu Verformungen der Makroverkapselungen und dadurch zu undefinierten, teils undurchströmbaren Verdichtungen bzw. auch zur Zerstörung von Kapseln durch dadurch bedingte mechanische Belastungen untereinander oder an Speicherteilen. Im umgekehrten Falle entsteht das gleiche Problem bei zu hohen Abtriebskräften, wenn z.B. gebräuchliche Salzhydrate eingesetzt werden, deren Dichte bei ca. 1,2-1,7 g/cm³ liegt.

Daher gibt es bislang keine geeignete Makroverkapselung für Latentspeichermaterialien, die eine thermisch funktionable, zyklenstabile und wirtschaftliche Einheit bildet.

Die Aufgabe der vorliegenden Erfindung besteht daher darin, eine Verkapselung für Latentspeichermaterial bereitzustellen, die zumindest eines der obengenannten Probleme, insbesondere mehrere dieser Probleme löst.

Diese Aufgabe wird gelöst mit dem erfindungsgemäßen Latentspeicherelement nach Anspruch 1 und dem erfindungsgemäßen Latentspeicher nach Anspruch 13. Vorteilhafte Weiterbildungen sind in der nachfolgenden Beschreibung und den abhängigen Unteransprüchen angegeben.

Der Erfinder hat erkannt, dass die gestellte Aufgabe überraschend dadurch in konstruktiv einfacher Art und Weise kostengünstig gelöst werden kann, wenn eine Querschnittsform für die Verkapselung gewählt wird, die von der Kreisform abweicht und die zum Rand hin abfällt. Es wird also eine Querschnittsform mit einer Unter- und Oberseite verwendet, die im Übergang von Unter- zu Oberseite diskontinuierlich verläuft. Dadurch kann bei einem vergleichsweise geringen Wandstärke der Verkapselung dennoch eine ausreichend hohe Verformungsstabilität erzielt werden, wobei durch den zum Rand abfallenden Querschnitt eine ausreichende anströmbare Fläche selbst in Schüttungen besteht, um einen schnellen Wärmeaustausch mit einem Wärmetauschermaterial zu erzielen.

Das erfindungsgemäße Latentspeicherelement mit einem in einer Verkapselung angeordneten Latentspeichermaterial, das zumindest eine Phasenwechseltemperatur aufweist, an der ein Phasenwechsel zwischen einer ersten Phase und einer zweiten Phase erfolgt, zeichnet sich daher dadurch aus, dass die Verkapselung einen nichtkreisförmigen, zum Rand hin abfallenden Querschnitt mit einer Oberseite und eine Unterseite aufweist.

Aufgrund der damit verbundenen flächigen Form des Latentspeicherelements wird ein umströmendes Wärmeaustauschmedium zwangsweise über einen gesamten Speicherquerschnitt verteilt und es kommt zu keinen hydraulischen Kurzschlüssen, wie es bei umströmungsfreudigen Geometrien wie z. B. Kugeln passiert.

In einer vorteilhaften Weiterbildung ist vorgesehen, dass die Verkapselung eine scheibenförmige Gestalt, bevorzugt eine zigarren-, linsen- oder diskusähnliche Gestalt aufweist. Dadurch besteht bei ausreichender Stabilität eine ausreichend hohe Schüttungsdichte bei gleichzeitig sehr gutem Oberflächen/VolumenVerhältnis. Außerdem weist eine solche Verkapselung aufgrund des Querschnitts länglich gezogenen Profils am Rand sehr dünne Schichtdicken auf, die bis zur Mitte ansteigen. Daraus ergibt sich ein sehr belastbarer Formkörper mit großer Oberfläche.

Ein weiterer Vorteil durch diese Geometrie ergibt sich bei der Einbringung in Speichertanks: bisherige Schüttungen zeigten mehr oder weniger große Unregelmäßigkeiten, wodurch die Packungsdichte gestört wird. Gleichzeitig ergeben sich Störungspotentiale bezüglich der Durchströmung. Die Linsen bzw. Diskusse haben den großen Vorteil, dass sie sich selbst aufeinander anordnen. So entsteht durch die Linsengeometrie eine zwangsweise relativ homogene Schichtung. Während beispielsweise Kugeln, die völlig zufällig in ein Gefäß geschüttet werden, nur maximal 62,5 % des zur Verfügung stehenden Volumens ausfüllen, füllen willkürlich aufgeschüttete Ellipsoide (Zigarren, Linsen, Diskusse, die zur Klasse der gestauchten oder gestreckten Kugeln gehören) je nach Form fast 70 % bis 74 % aus. Dies liegt wohl daran, dass solche ellipsoidartigen Formen im Gegensatz zu Kugeln nicht nur sechs Nachbarn benötigen, um sich nicht mehr bewegen zu könne, sondern sich so lange bewegen könne, bis sie von mehr als zehn Nachbarn fixiert werden, solche Schüttungen können sich also länger setzen, als Kugelpackungen.

In einer vorteilhaften Weiterbildung, - für die auch unabhängig von der sonstigen geometrischen Ausbildung der Verkapselung mit einem nichtkreisförmigen, zum Rand hin abfallenden Querschnitt mit einer Oberseite und einer Unterseite Schutz beansprucht wird - ist vorgesehen, dass die Verkapselung zumindest eine Ausnehmung aufweist, die bevorzugt als Durchbrechung ausgebildet ist, wobei die Ausnehmung insbesondere zentral angeordnet ist. Eine Linse beispielsweise besitzt ein gutes Füllvolumen wobei in der Mitte das höchste Dickenmaß besteht. An dieser Stelle findet sich allerdings auch die größte PCM-Schichtdicke, wobei das dort befindliche PCM kaum in vollem Maße am Phasenwechsel teilnehmen kann. Dieser "Totraum" ist durch die zentrale Ausnehmung neutralisiert. Da geometrisch gesehen der Mittelpunkt eines Kreises die kleinste Fläche aufweist, fallen der relative Hohlraum und damit der entsprechende PCM-Verlust nicht ins Gewicht. Allerdings muss diese Ausnehmung nicht zentral, sondern kann auch außerzentral, beispielsweise seitlich angeordnet sein, wobei die vorteilhafte Wirkungen sich bei einer zentralen Anordnung besser einstellen. Es können auch mehr als eine Ausnehmung vorhanden sein.

In einer vorteilhaften Weiterbildung, - für die auch unabhängig von der sonstigen geometrischen Ausbildung der Verkapselung mit einem nichtkreisförmigen, zum Rand hin abfallenden Querschnitt mit einer Oberseite und einer Unterseite Schutz beansprucht wird - ist vorgesehen, dass die Verkapselung zumindest auf einer Seite einen eingestülpten, bevorzugt konkaven Bereich aufweist. Der Bereich ist vorzugsweise zentral angeordnet. Dieser eingestülpte Bereich kann beispielsweise durch Schrägen oder Fasen umgesetzt sein. Dieser eingestülpte Bereich kommuniziert bevorzugt mit der Ausnehmung.

Durch die Ausnehmung und/oder die Einstülpung wird jeweils eine sehr große mechanische Stabilität erzeugt. Außerdem werden jeweils die PCM-Schichtdicken funktionsgerecht reduziert, so dass das dort enthaltene PCM voll am Phasenwechsel teilnehmen kann. Ausnehmung und/oder Einstülpung bewirken außerdem, dass die Durchlässigkeit innerhalb einer Schüttung maßgeblich verbessert und ein "Verstopdurch aufliegende Flächen anderer Latentmaterialelemente verhindert werden.

Gemäß der Erfindung ist vorgesehen, dass die Verkapselung zumindest auf einer der Seiten Ober- oder Unterseite zumindest eine Sicke aufweist, die sich bevorzugt radial und insbesondere vollständig zwischen einem Randbereich und einem Zentralbereich erstreckt. Dadurch wird die PCM-Schichtdicke weiter reduziert. Außerdem erfolgt eine Vergrößerung der Oberfläche für einen Wärmeaustausch, die Durchströmbarkeit einer Schüttung wird verbessert und mechanische Stabilität erhöht. Bei einem radialen Verlauf verlaufen die Sicken zur Mitte hin dichter, also aufeinander zu, so dass dort ebenfalls die kommen, wo die PCM-Schichtdicken reduziert werden.

In einer vorteilhaften Weiterbildung, - für die auch unabhängig von der sonstigen geometrischen Ausbildung der Verkapselung mit einem nichtkreisförmigen, zum Rand hin abfallenden Querschnitt mit einer Oberseite und einer Unterseite Schutz beansprucht wird - ist vorgesehen, dass die Verkapselung auf der Ober- und auf der Unterseite zumindest jeweils eine Sicke aufweist und die Sicken der Oberseite und die Sicken der Unterseite in Bezug auf eine Draufsicht auf die Verkapselung azimutal gegeneinander versetzt angeordnet sind. Dadurch wird die PCM-Schichtdicke vorteilhaft reduziert, wobei zugleich im Inneren der Verkapselung eine Durchströmung nicht unterbrochen oder gestört wird.

In einer vorteilhaften Weiterbildung, - für die auch unabhängig von der sonstigen geometrischen Ausbildung der Verkapselung mit einem nichtkreisförmigen, zum Rand hin abfallenden Querschnitt mit einer Oberseite und einer Unterseite Schutz beansprucht wird - ist vorgesehen, dass die Verkapselung zusätzlich zum Latentspeichermaterial Luft oder ein oder mehrere andere geeignete Gase aufweist, wobei der Volumenanteil der Luft am Gesamtvolumen der Verkapselung vorzugsweise im Bereich von 1% bis 30%, bevorzugt im Bereich von 5% bis 20% und insbesondere im Bereich von 10% bis 15% liegt. Damit ist ein besonders überraschender Effekt in Bezug auf die Kompensation der PCM-Ausdehnung beim Phasenwechsel verbunden: Normalerweise müssen für die Volumenausdehnung des PCM im Speicherbehälter des Latentspeichers rund 10-12 Vol% Reserve vorgesehen werden, beispielsweise durch Ausdehungsgefäße, einen entsprechend reduzierten Stand des Wärmeaustauschmedium usw. Durch die besondere Geometrie der Verkapselung kann die Verkapselung ohne Probleme expandieren und kontrahieren (über die Flächenflanken). Außerdem verbleibt beim Befüllen der Verkapselung mit PCM aus technischen Gründen ein relativ kleines Luftpolster, das sich in der Schüttung zumeist in der Mitte oder am Rand der Verkapselung anlagert und dort eine zusätzliche Versteifung bewirkt. In diese Lufträume wird das PCM bei der Volumenausdehnung gedrückt wobei die Luft komprimiert wird bzw. in Lösung mit dem PCM übergeht. Dadurch liegt die reale Volumenausdehung der Verkapselung nur bei ca. 2-5 Vol% liegt. Der erfindungsgemäße Latentspeicher kann daher mit einer geringeren Volumenreserve und damit mit einem höheren Latentspeichermaterialvolumen beladen werden.

In einer vorteilhaften Weiterbildung, - für die auch unabhängig von der sonstigen geometrischen Ausbildung der Verkapselung mit einem nichtkreisförmigen, zum Rand hin abfallenden Querschnitt mit einer Oberseite und einer Unterseite Schutz beansprucht wird - ist vorgesehen, dass die Verkapselung zusätzlich zum Latentspeichermaterial zumindest ein Nivellierungsmaterial, nämlich ein Beschwerungsmaterial oder ein Auftriebsmaterial aufweist, dessen Volumenanteil vorzugsweise so bemessen ist, dass das Latentspeicherelement eine Dichte im Bereich von 0,8 bis 1,2 g/cm³, bevorzugt 0,9 bis 1,1 g/cm³, insbesondere 0,99 bis 1,01 g/cm³ an der Phasenwechseltemperatur, eine Dichte im Bereich 0,90 bis 0,98 g/cm³ für die vollständig ausgebildete erste, (beispielsweise flüssige) Phase oberhalb der Phasenwechseltemperatur und eine Dichte im Bereich 1,02 bis 1,1 g/cm³ für die vollständig ausgebildete zweite (beispielsweise noch feste) Phase unterhalb der Phasenwechseltemperatur.

Falls neben einem ersten Nivellierungsmaterial, beispielsweise einem Beschwerungsmaterial, auch zusätzlich Luft in der Verkapselung zur Volumenkompensation eingesetzt wird, die dann gleichzeitig ein zweites Nivelierungsmaterial darstellt, dann sollten folglich die jeweiligen Volumenanteile so festgelegt werden, dass zum einen die Volumenkompensation optimal gelingt und zum anderen die Dichte des Latentspeicherelements in dem vorstehend genannten Bereich liegt. Das selbe würde auch gelten, wenn es sich bei dem ersten Nivellierungsmaterial um ein Auftriebsmaterial handeln würde.

Eine Dichteerhöhung kann beispielsweise durch das Einfüllen von Schwerspat, Sand, Metallkugeln usw. erfolgen. Dadurch gelingt es, die Gesamtdichte der Linse auf ca. 1 zu bringen, bzw. sie wird etwas schwerer eingestellt, damit bei kristallinem Zustand ein leichter Abtrieb herrscht und beim Phasenwechsel die Dichte um 1 liegt, um anschließend bei vollständiger Ausdehnung im flüssigen Zustand etwas unter 1 (leichter Auftrieb) zu liegen. Dadurch gelingt es, die Makroverkapselungen und die daraus resultierenden Schüttungen schonend und reversibel zu gestalten. Die Makroverkapselungen können dadurch in der Schüttung arbeiten und sich immer wieder optimiert zueinander anlagern. Mit dieser Auflockerung, die zusätzlich in ihrer Intensität über die Temperatur gesteuert werden kann (je höher die Temperatur, desto größer der Auftrieb), wird die Packungsdichte immer wieder in ihren optimalen Ausgangszustand zurückversetzt.

Beim Einsatz von Phasenwechselmaterialien mit einer höheren Dichte als 1 (wie Salzhydrate, z. B. das ATS 58 der Fa. Axiotherm mit einer Dichte 1,3) muss gegen den zu hohen Abtrieb bei jedem Phasenwechselzustand vorgegangen werden. Hier wird anstelle von beschwerenden Zusatzstoffen ein größeres Luftvolumen innerhalb der Makroverkapselung vorgesehen. Dieses kann im Bereich von 1 Vol.% bis 30 Vol.% liegen und insbesondere zumindest 10 Vol.% betragen. Dieses Luftvolumen wirkt sich auch, wie schon erwähnt, günstig bezüglich der temperaturbedingten Volumenänderung aus.

Durch eine spezielle Formgebung der Linse mit einer im Mittenbereich größeren Dicke, hat diese Luft ein großes Volumen zur Verfügung, das wiederum zu einer Minimierung der benötigten Oberfläche führt, die dann durch den Lufteinschluss nicht am Wärmeübergang (ca. 10-20%, je nach Luftmenge) teilnehmen kann. Bei herkömmlichen flächigen Makroverkapselungen bilden sich schon bei minimalen Lufteinschlüssen geometrisch bedingt sehr große, flache Luftblasen, die aufgrund der schlechten Wärmeleitung von Luft die Leistung, selbst bei minimalen Luftmengen, extrem (ca. 50 %) vermindern. Die eingeschlossene Luft kann auch durch Inertgase (z. B. Stickstoff) ersetzt werden, je nach chemischen Eigenschaften des PCM.

Ein weiterer Vorteil, den die erfindungsgemäßen Latentspeicherelemente in einem mit Wärmeaustauschmedium gefüllten Tank hervorrufen, ist der folgende: Im Bereich der Latentspeicherelemente, die oberhalb der Phasenwechseltemperatur temperiert sind, bei denen also das Latentspeichermaterial Innern aufgeschmolzen ist, stellt sich eine konstante Temperatur in dieser Höhe des Speichers ein. Das bedeutet, dass sich aufgrund der strömungsbedingten Eigenschaften der Linsen in Kombination mit deren großer Leistungsfähigkeit (bedingt durch die große Oberfläche) keine Temperaturschichtung mit Gefälle einstellt im Tank (wie bei einem normalen sensiblen Speicher), sondern dass sich die erfindungsgemäße Latentspeicher-Konstruktionsform isotherm verhält. Bei z.B. einem voll beladenen Latentspeicher herrscht daher von oben bis unten die gleiche Temperatur.

In einer vorteilhaften Weiterbildung ist vorgesehen, dass die Verkapselung ein bevorzugt thermoplastisches Kunststoffmaterial, insbesondere z.B. Polyethylen, Polypropylen, Polyamid, Polyester oder Polycarbonat aufweist. Dadurch liegt eine besonders hohe Stabilität auch bei geringen Wandstärken und hoher Lebensdauer vor. Solche Verkapselungen können in einem Temperaturbereich von ca. -50 bis +200 °C eingesetzt werden. Es können aber auch andere Kunststoffe, wie vernetzbare Kunststoffe (Silan-, Peroxidische-, Strahlvernetzung etc.) bzw. Duroplaste eingesetzt werden.

Selbständiger Schutz wird beansprucht für die erfindungsgemäße Verkapselung für ein Latentspeichermaterial.

Ebenfalls selbstständiger Schutz wird beansprucht für den erfindungsgemäßen Latentspeicher mit ein oder mehreren Latentspeicherelementen, wobei die Latentspeicherelemente ein in einer Verkapselung angeordnetes Latentspeichermaterial beinhalten, das zumindest eine Phasenwechseltemperatur aufweist, an der ein Phasenwechsel zwischen einer ersten Phase und einer zweiten Phase erfolgt, wobei der Latentspeicher ein die Latentspeicherelemente zumindest teilweise umgebendes Wärmeträgermedium aufweist, wobei der Latentspeicher zumindest einen Anschluss zur Wärmebeladung und zumindest einen Anschluss zur Wärmeentnahme aufweist, der sich dadurch auszeichnet, dass zumindest ein Latentspeicherelement als das erfindungsgemäße Latentspeicherelement ausgebildet ist. Die beiden Anschlüsse zur Wärmebe- und -entladung können auch als ein einheitlicher Anschluss ausgebildet sein. Insbesondere können die Anschlüsse als Anschlüsse an einen Primärkreislauf ausgebildet sein.

In einer vorteilhaften Weiterbildung ist vorgesehen, dass der Latentspeicher zumindest zwei Latentspeicherelemente mit unterschiedlicher Phasenwechseltemperatur umfasst. Dabei können die unterschiedlichen Latentspeicherelemente untereinander vermischt oder in einzelnen Schichten im Speicher angeordnet sein. Die letztgenannte Kaskadierung hat den Vorteil, dass z.B. bei schwankenden Beladungstemperaturen die Spitzen mit einem höher schmelzenden PCM abgefangen und deren Energie eingespeichert wird und danach mit der nächsten, niedrigerer temperierten Schichtung, der Rest der Wärmeenergie auf einem niedrigeren Temperaturniveau eingespeichert wird. Dieses Abfangen der Übertemperaturen und Heruntertransformieren auf gestufte Einspeichertemperaturen trägt dadurch zur Effizienzsteigerung des Latentspeichers bei.

Durch den Einsatz der erfindungsgemäßen Latentspeicherlemente können diese ohne spezielle Einbauten in einem in dem Latentspeicher verwendeten einfachen, leeren Behälter als Schüttung eingebracht werden, wobei sie sich aufgrund ihrer Form selbsttätig ausrichten und schichten. Daher ist es erstmals möglich, beliebige Speicherdimensionen als Latentspeicher zu realisieren. Dabei spielt es keine Rolle, ob der Behälter rund, oval eckig o. ä. ist. Dadurch, dass die Latentspeicherlemente auch stets voneinander gelöst sind, können sie bei Bedarf ausgetauscht werden, z. B. bei einem systembedingten Temperaturwechsel. So ist es auch erstmals möglich, bestehende Latentspeicher umzurüsten bzw. neue Latentspeicher vor Ort leer aufzustellen und später zu befüllen.

Die Kennzeichen und weitere Vorteile der vorliegenden Erfindung werden im Folgenden anhand der Beschreibung eines bevorzugten Ausführungsbeispiels im Zusammenhang mit der Figur deutlich werden. Es zeigen rein schematisch:
- Fig. 1: eine erfindungsgemäße Ausführungsform eines Latentspeicherelements in einer perspektivischen Ansicht,
- Fig. 2: das erfindungsgemäße Latentspeicherelement nach Fig. 1 in einer Draufsicht,
- Fig. 3: das erfindungsgemäße Latentspeicherelement nach Fig. 1 in einer Seitenansicht,
- Fig. 4: das erfindungsgemäße Latentspeicherelement nach Fig. 1 in einer horizontal geschnittenen Ansicht,
- Fig. 5: das erfindungsgemäße Latentspeicherelement nach Fig. 1 in einer vertikal geschnittenen Ansicht,
- Fig. 6: den erfindungsgemäßen Latentspeicher mit erfindungsgemäßen Latentspeicherelementen nach Fig. 1 in einem ersten Betriebszustand und
- Fig. 7: den erfindungsgemäßen Latentspeicher nach Fig. 4 in einem zweiten Betriebszustand.

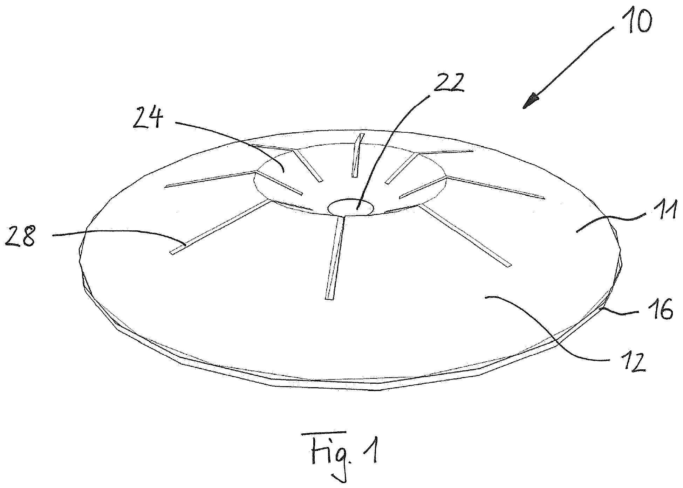

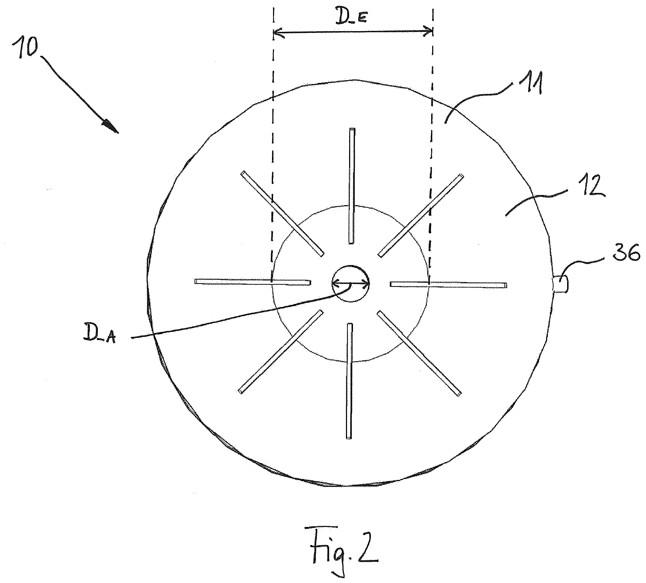

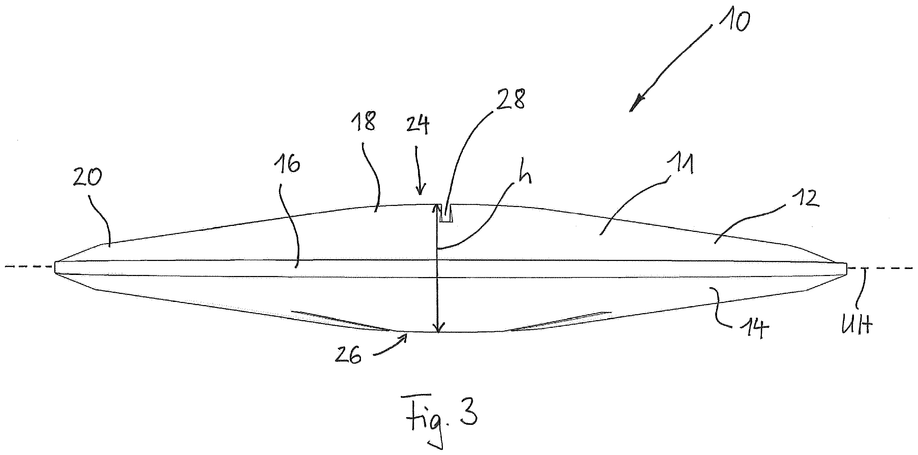

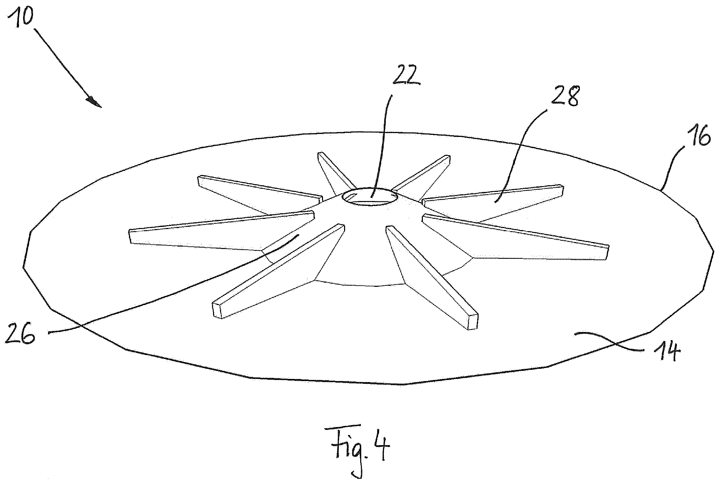

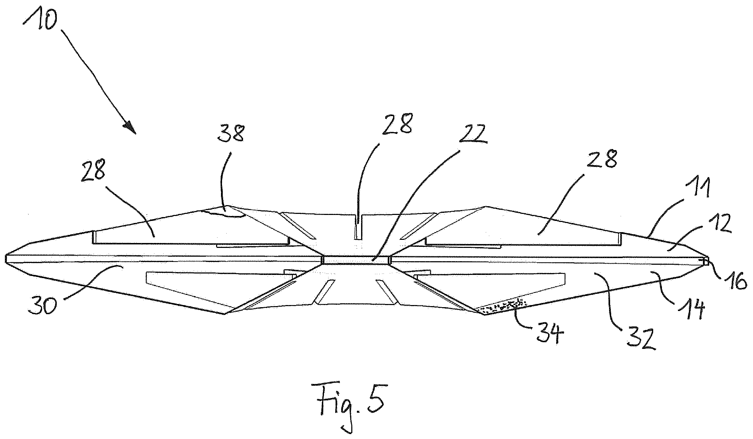

In den Fig. 1 bis 5 ist das erfindungsgemäße Latentspeicherelement 10 in verschiedenen Ansichten gezeigt.

Es ist zu erkennen, dass das Latentspeicherelement 10, ein Gehäuse 11, das aus Kunststoff besteht, mit einer Ober- 12 und einer Unterseite 14 aufweist, die am Umfang 16 miteinander verbunden, beispielsweise verschweißt sind. Im Querschnitt weist das Latentspeicherelement 10 eine etwa linsenförmige Gestalt auf, wobei ein dickerer Mittenbereich 18 besteht und die Dicke zum Randbereich 20 hin abfällt.

Es besteht eine zentrale Ausnehmung 22 mit jeweils konkaven Einstülpungen 24, 26 auf der Ober- 12 und der Unterseite 14. Zusätzlich sind radial verlaufende Sicken 28 sowohl auf der Ober- 12 als auch auf der Unterseite 14 vorgesehen, die sich vollständig vom Randbereich 20 zum Mittenbereich 18 hin erstrecken und einen durchgehend gleichen Abstand vom Umfangshorizont UH aufweisen. Diese Sicken 28 sind auf jeder Seite 12, 14 jeweils um 45° voneinander beabstandet angeordnet, wobei die gegenüberliegenden Sicken von Ober- 12 und Unterseite 14 jeweils mittig zueinander versetzt angeordnet sind, wodurch sich ein durchgehender Durchströmungsbereich 30 für das im Latentspeicherelement 10 angeordnete Latentspeichermaterial 32 ergibt das zur Dichteerhöhung vorgesehene Beschwerungsmaterial 34 besteht.

Am Umfang 16 ist Einfüllansatz 36 angeordnet, der nach erfolgreicher Befüllung des Latentspeicherelements 10 mit Latentspeichermaterial 32 und Beschwerungsmaterial 34 als erstes Nivellierungsmaterial versiegelnd verschweißt wurde. Im Bereich des Einfüllansatzes 36 ist in der Oberseite 12 keine Sicke 28 vorgesehen, um die Einfüllvorgang nicht zu behindern. Zugleich bildet sich durch das Einfüllen eine kleine Luftblase 38 aus, die zur Volumenkompensation beim Phasenwechsel verwendet wird und gleichzeitig ein zweites Nivellierungsmaterial darstellt.

Das Latentspeichermaterial 32 ist z.B. ein paraffinbasiertes PCM mit einer Phasenwechseltemperatur von z. B. 53 °C der Firma Axiotherm (Bezeichnung: ATP 53). Als Beschwerungsmaterial 34 kommt Quarzsand (Korngrößenverteilung 0,063 - 2 mm) zum Einsatz. Der Durchmesser des Gehäuses 11 beträgt am Umfang 16 ca. 18 cm (wobei Bereiche von ca. 5 cm bis ca. 50 cm ebenfalls gut verwendbar sind). Die maximale Höhe h des Gehäuses 11 beträgt ca. 3 cm (wobei Bereiche von ca. 1 cm bis ca. 8 cm ebenfalls gut verwendbar sind). Der Durchmesser D_E der Einstülpungen 24, 26 beträgt ca. 6,3 cm (wobei Bereiche von ca. 3 cm bis ca. 20 cm ebenfalls gut verwendbar sind) und der Durchmesser D_A der Ausnehmung 22 beträgt ca. 1,2 cm (wobei Bereiche von ca. 0,5 cm bis ca. 5 cm ebenfalls gut verwendbar sind). Die Wanddicke des Gehäuses beträgt ca. 0,1 cm. Das Gesamtvolumen des Gehäuses 11 beträgt somit ca. 382 ml, wobei die Luftblase 38 ein Volumen von ca. 5-8 ml einnimmt und auch der Volumenkompensation dient.

Der Volumenanteil des ersten Nivellierungsmaterials 34 ist in Bezug auf den Volumenanteil des zweiten Nivellierungsmaterials 38 und die Dichte des Latentspeichermaterials 32 in Verbindung mit dem Gesamtvolumen der Verkapselung 11 so eingestellt, dass sich die vorteilhaften Wirkungen der Nivellierung einstellen können.

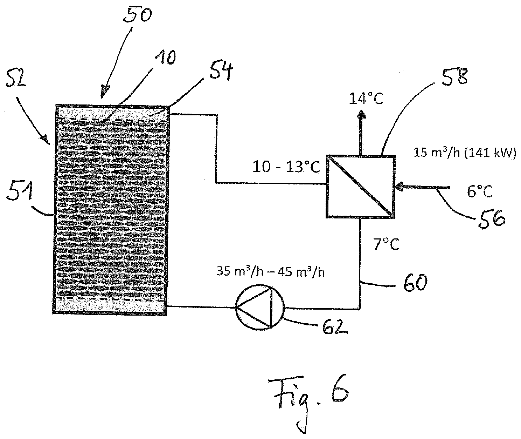

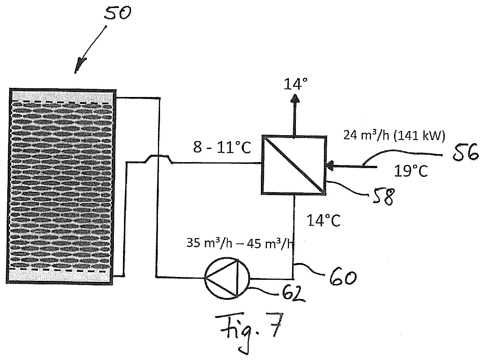

In den Fig. 6 und 7 ist der erfindungsgemäße Latentspeicher 50 in zwei verschiedenen Betriebszuständen gezeigt, dessen Behälter 51 mit einer Schüttung 52 aus erfindungsgemäßen Latentspeicherelemente 10 versehen ist. Als Wärmeaustauschmedium 54 ist Wasser, optional versetzt mit Zusätzen wie Frostschutzmitteln, Inhibitoren, Korrosionschutz, eingesetzt, wobei das Volumen-Beladungsverhältnis zwischen Wasser und Latentspeicherelemente 10 etwa 1:1 beträgt.

In Fig. 6 sind die Verhältnisse beim Beladen des Latentspeichers 50 mit Kälte aus einem Kältekreislauf 56 über einen Wärmetauscher 58, der eine hydraulische Medientrennung zwischen Kältekreislauf 56 (Sekundärkreislauf) und Wärmetauscherkreislauf 60 (Primärkreislauf) des Latentspeichers 50 vornimmt, gezeigt. Dabei ist im Primärkreislauf 60 eine Pumpe 62 vorgesehen. Je nach Anwendungsfall kann der Latentspeicher 50 auch direkt, also ohne Systemtrennung über einen Wärmetauscher 58, betrieben werden. Bei einer Systemtrennung lassen sich über unterschiedliche Massenströme im Primär- 60 und Sekundärkreis 56 jedoch vorteilhaft die benötigten Energiemengen und Temperaturen ideal einstellen.

In Fig. 7 sind die entsprechenden Verhältnisse bei der Kälteentnahme aus dem Latentspeicher 50 gezeigt.

Es ist zu erkennen, dass es sich bei dem erfindungsgemäßen Latentspeicher 50 um einen Hybrid-Speicher handelt, bei dem sich makroverkapseltes PCM 32 in einem wassergefüllten Behälter 56 befindet.

Die Makroverkapselungen 11 sind dabei so konstruiert, dass neben einer großen Oberfläche gleichzeitig die PCM-Schichtdicken so gering gehalten sind, dass das gesamte PCM 32 am Phasenwechselprozess teilnimmt und zugleich eine vollflächig durchströmbare Schichtung 52 der geschichteten Latentspeicherelemente 10 gesichert sind.

Das im Latentspeicher 50 enthaltene Wasser 54 wird ebenfalls für die Energiebilanz und Dynamik des Latentspeichers 50 genutzt. Durch die Masse des Wassers 54 werden im Wasseranteil in allen Temperaturbereichen, je nach Temperaturdifferenz, mehr oder weniger nennenswerte Energiemengen gespeichert. Aufgrund der Systemtrennung des Latentspeichers 50 durch den Plattenwärmetauscher 58 vom Sekundärkreislauf 56 läuft dieses Speicherwasser 54 pumpenunterstützt im Primärkreislauf 60. Dadurch bleiben die eingespeicherten Energiemengen im Speichersystem erhalten. Das Wasser 54 dient also zum einen als Träger für die thermische Energie zum Ein- und Auskoppeln der thermischen Energie und zum anderen als sensibles Speichermedium.

Der erfindungsgemäße Latentspeicher 50 kann nun beispielsweise folgendermaßen in den Energieprozess eines Gebäudes (nicht gezeigt) integriert werden, bei dem eine Absorptionskältemaschine (nicht gezeigt), die beispielsweise mit Lithiumbromid/Wasser betrieben wird und zur Klimatisierung der Räume dient, und in apparativer Ergänzung eine entsprechend dimensionierte Blockheizkraftwerk (BHKW)- und Wärmepumpentechnik, Solarthermie (nicht gezeigt) vorgesehen sind:
Wenn eine zur Kälteerzeugung beispielsweise eingesetzte Absorbtionskältemaschine zu jeweils günstigen Betriebspunkten oder im reinen Bedarfsfall läuft, wird ein Teil der Kühlenergie direkt zum Kühlen des Gebäudes eingesetzt. Der andere Teil des Energiestroms kann in dem Latentspeicher 50 eingespeichert werden. Diese überschüssige Kälte, die aufgrund der kleinen Temperaturdifferenzen, bei denen moderne Kälteanlagen aus wirtschaftlichen und technischen Gründen gefahren werden und sich daher in einem sensiblen Speicher, der z.B. Wasser enthalten würde, nur zu einem relativ geringen Anteil einspeichern ließen, kann damit optimal genutzt werden. Der mit Kälte beladene Latentspeicher 50 steht dann als zusätzlicher Spitzenlastspeicher oder Redundanz (z. B. im Wartungsfall) zur Abdeckung von notwendigen Leistungsspitzen umgehend zur Verfügung. Der erfindungsgemäße Latentspeicher 50 arbeitet bei konstanten Temperaturen nahe der Phasenwechseltemperatur des PCM 32 und kann bei kleinen Temperaturdifferenzen sehr viel thermische Energie durch den Phasenwechsel des PCM einspeichern und wieder abgeben.

Die erfindungsgemäße Latentspeicher 50 ist beispielsweise als Spitzenlastspeicher mit einem PCM-Anteil von 2.280 kg PCM 32 und 6,500 kg Wasser 54 ausgelegt. Daraus ergibt sich bei einer Temperaturdifferenz von 8K eine Kapazität von 125,4 kWh für das PCM 32 und 60,3 kWh für den Wasseranteil 54, also eine Gesamtkapazität von 185,7 kWh. Die Leistung liegt zwischen 25-50 kW, abhängig von Volumenstromverhältnis, Temperaturdifferenz und Zeitdauer. Durch Variation der Volumenströme im Primär- 60 und Sekundärkreislauf 56 können die Leistungen zwischen den beiden Kreisläufen 56, 60 gleitend angepasst werden.

Durch die Hybrid-Eigenschaften ist der Latentspeichers 50 bei passender thermischer Konditionierung in der Lage, zuerst aufgrund des Wasseranteils ohne Verzögerung sensible Kühlenergie und dann aufgrund des Latentspeichermaterials 32 ohne spürbaren Übergang die latent eingespeicherte Energie abzugeben. Im Falle eines plötzlich ansteigenden Kühlbedarfs (z. B. Eintreffen einer sehr großen Besuchergruppe in einem öffentlichen Gebäude) können so beispielsweise ein oder mehrere Latentspeicher 50 einfach in einen entsprechenden Sekundärkreis 56 (Raumkühlkreislauf) entladen werden. Das erfolgt in einem energetisch günstigen, kontinuierlichen Prozess, da aufgrund der kontinuierlichen Entladetemperatur keine energieaufwendigen Maßnahmen wie stetige Pumpen-Volumenstromänderungen erfolgen müssen. Dadurch entsteht eine Glättung des Leistungs- und Temperaturprofils/Aufnahme überschüssiger Kälteenergie (wenn der Kühlbedarf sinkt). Die sich parallel in Betrieb befindlichen BHKW- und Wärmepumpenanlagen profitieren dabei von dieser Prozessstabilisierung.

Diese voneinander abhängigen Energieanlagen (BHKW- und Wärmepumpenanlagen) werden nämlich grundsätzlich vom verwendeten Speichersystem dominiert: ohne bzw. mit einem reinen sensiblen Speicher (Wasser) sind die nacheinander geschalteten Anlagenkomponenten zu einem steten Takten bzw. linearer Leistungssteigerung zum Bedienen der steigenden Speicherwassertemperaturen gezwungen. Neben erhöhten Energieverbräuchen und einem wesentlich größerem Betriebsraumbedarf (2-3fach gegenüber der erfindungsgemäßen Lösung) wird vor allem die Lebensdauer der Anlagenkomponenten verkürzt. Zudem ist eine energetisch sinnvolle Regelung kaum möglich. Allein das Hineinfahren der Wärmepumpe in den Hochdruckbereich ist mit extremen Temperaturdifferenzen in den Taktungen verbunden und energetisch sowie technisch hochgradig kontraproduktiv.

Bei Verwendung ein oder mehrere erfindungsgemäßer Latentspeicher 50 hingegen wird durch die Pufferung großer Energiemengen bei konstanter Temperatur die gleitende Fahrweise der beteiligten Energieerzeuger durch diese Gegenpufferung automatisch geregelt. Dadurch kann die Kältemaschine mit einer konstanten Leistung durchfahren, ohne zu takten oder ständig die Leistung auf den momentanen Kühllastbedarf anzupassen zu müssen.

Unterstützt wird diese Konstanz durch einen möglichen Teilladungsbetrieb. Dabei werden die Latentspeicherkapazitäten im Normalbetrieb nur bis maximal 40% heruntergefahren. So stehen im Fall eines Kältemaschinenausfalls entsprechende Kältereserven bereit, um eine Überbrückungsversorgung zu sichern.

Eine Absorptionskälteanlage hat mit dem erfindungsgemäßen Latentspeicher 50 eine leistungsfähige und hochkapazitive Kältesenke mit konstant arbeitender Temperatur. Dadurch wird ein Takten der sonst kontinuierlich arbeitenden Kältemaschine verhindert, energetisch ungewollte Ab- und Anfahrprozesse werden damit vermieden.

Auch wenn die Erfindung vorstehend anhand eines Ausführungsbeispiels mit einer Phasenwechseltemperatur von 53 °C beschrieben wurde, kann sie grundsätzlich für Arbeits-Temperaturbereiche bzw. Phasenwechseltemperaturen zumindest zwischen -30 bis 200 °C eingesetzt werden.

Aufgrund der konstanten Einspeichertemperatur, die durch das Phasenwechselmaterial bestimmt wird, ist diese Anwendung mit ihren Kapazitäts- und Leistungsdaten hervorragend geeignet, um eine höchst effiziente Energiespeicherung und damit Betriebsweise bei volatilen oder taktenden Energielieferanten wie z. B. Wärmepumpen, Solarthermie, BHKW, Öl- und Gasbrennern, Erdwärme bzw. -kühlung usw. zu realisieren.

Es ist deutlich geworden, dass mit der vorliegenden Erfindung eine Makroverkapselung 11 für Latentspeichermaterialien geschaffen wurde, die eine thermisch funktionale, zyklenstabile und wirtschaftliche Einheit bildet, so dass sich damit sehr einfach und kostengünstig Latentspeicher 50 aufbauen lassen, die eine ausgezeichnete Wärmeaufnahme- und -abgabeeffizienz besitzen.

Soweit nichts anderes angegeben ist, können sämtliche Merkmale der vorliegenden Erfindung frei und isoliert von anderen Merkmalen miteinander kombiniert werden. Auch die in der Figurenbeschreibung beschriebenen Merkmale können, soweit nichts anderes angegeben ist, als Merkmale der Erfindung frei und isoliert mit den übrigen Merkmalen, insbesondere den Anspruchsmerkmalen, kombiniert werden. Dabei können gegenständliche Merkmale auch umformuliert als Verfahrensmerkmale Verwendung finden und Verfahrensmerkmale umformuliert als gegenständliche Merkmale.

### Bezugszeichenliste

- 10: erfindungsgemäßes Latentspeicherelement
- 11: Gehäuse, Verkapselung
- 12: Oberseite
- 14: Unterseite
- 16: Umfang
- 18: Mittenbereich, Zentralbereich
- 20: Randbereich
- 22: zentrale Ausnehmung
- 24, 26: konkave Einstülpungen
- 28: radial verlaufende Sicken
- 30: Durchströmungsbereich
- 32: Latentspeichermaterial, PCM
- 34: Beschwerungsmaterial, erstes Nivellierungsmaterial
- 36: Einfüllansatz
- 38: Luftblase, zweites Nivellierungsmaterial
- 50: erfindungsgemäßer Latentspeicher
- 51: Behälter des Latentspeichers 50
- 52: Schüttung erfindungsgemäßer Latentspeicherelemente 10
- 54: Wärmeaustauschmedium, Wasser, Wärmeträgermedium
- 56: Kältekreislauf, Sekundärkreislauf
- 58: Wärmetauscher
- 60: Wärmetauscherkreislauf, Primärkreislauf
- 62: Pumpe
- UH: Umfangshorizont
- h: maximale Höhe des Gehäuses 11
- D_E: Durchmesser der Einstülpungen 24, 26
- D_A: Durchmesser der Ausnehmung 22

## Patentansprüche

1. Latentspeicherelement (10) mit einem in einer Verkapselung (11) angeordneten Latentspeichermaterial (32), das zumindest eine Phasenwechseltemperatur aufweist, an der ein Phasenwechsel zwischen einer ersten Phase und einer zweiten Phase erfolgt, wobei die Verkapselung (11) eine ellipsoide Gestalt mit einen nichtkreisförmigen, zum Rand hin abfallenden Querschnitt mit einer Oberseite (12) und eine Unterseite (14) aufweist, **dadurch gekennzeichnet, dass** die Verkapselung (11) zumindest auf einer der Seiten Ober- (12) oder Unterseite (14) zumindest eine Sicke (28) aufweist.

2. Latentspeicherelement (10) nach Anspruch 1, **dadurch gekennzeichnet, dass** die Verkapselung (11) eine scheibenförmige Gestalt, bevorzugt eine linsen- oder diskusähnliche Gestalt aufweist.

3. Latentspeicherelement (10) nach Anspruch 1 oder 2, **dadurch gekennzeichnet, dass** die Verkapselung (11) zumindest eine Ausnehmung (22) aufweist, wobei die Ausnehmung (22) bevorzugt als Durchbrechung ausgebildet ist, wobei die Ausnehmung (22) insbesondere zentral angeordnet ist.

4. Latentspeicherelement (10) nach einem der vorherigen Ansprüche, **dadurch gekennzeichnet, dass** die Verkapselung (11) zumindest auf einer Seite (12, 14) einen eingestülpten, bevorzugt konkaven Bereich (24, 26) aufweist.

5. Latentspeicherelement (10) nach Anspruch 4, **dadurch gekennzeichnet, dass** der eingestülpte Bereich (24, 26) zentral angeordnet ist.

6. Latentspeicherelement (10) nach Anspruch 4 oder 5, **dadurch gekennzeichnet, dass** der eingestülpte Bereich (24, 26) mit der Ausnehmung (22) nach Anspruch 3 kommuniziert.

7. Latentspeicherelement (10) nach einem der vorherigen Ansprüche, **dadurch gekennzeichnet, dass** die Sicke (28) sich bevorzugt radial und insbesondere vollständig zwischen einem Randbereich (20) und einem Zentralbereich (18) erstreckt.

8. Latentspeicherelement (10) nach einem der vorherigen Ansprüche, **dadurch gekennzeichnet, dass** die Verkapselung (11) auf der Ober- (12) und auf der Unterseite (14) zumindest jeweils eine Sicke (28) aufweist und die Sicken (28) der Oberseite (12) und die Sicken (28) der Unterseite (14) in Bezug auf eine Draufsicht auf die Verkapselung (11) azimuthal gegeneinander versetzt angeordnet sind.

9. Latentspeicherelement (10) nach einem der vorherigen Ansprüche, **dadurch gekennzeichnet, dass** die Verkapselung (11) zusätzlich zum Latentspeichermaterial (32) zumindest ein Nivellierungsmaterial (34, 38) aufweist.

10. Latentspeicherelement (10) nach Anspruch 9, **dadurch gekennzeichnet, dass** das Nivellierungsmaterial (34, 38) ein oder mehrere Gase, vorteilhaft Luft (38) aufweist, wobei der Volumenanteil der Gase (38) am Gesamtvolumen der Verkapselung (11) vorzugsweise im Bereich von 1% bis 30%, bevorzugt im Bereich von 5% bis 20% und insbesondere im Bereich von 10% bis 15% liegt.

11. Latentspeicherelement (10) nach Anspruch 9 oder 10, **dadurch gekennzeichnet, dass** der Volumenanteil des Nivellierungsmaterials (34, 38) so bemessen ist, dass das Latentspeicherelement (10) eine Dichte im Bereich von 0,8 bis 1,2 g/cm³, bevorzugt 0,9 bis 1,1 g/cm³, insbesondere 0,99 bis 1,01 g/cm³ an der Phasenwechseltemperatur, eine Dichte im Bereich 0,90 bis 0,98 g/cm³ für die vollständig ausgebildete erste Phase oberhalb der Phasenwechseltemperatur und eine Dichte im Bereich 1,02 bis 1,1 g/cm³ für die vollständig ausgebildete zweite Phase unterhalb der Phasenwechseltemperatur aufweist.

12. Latentspeicherelement (10) nach einem der vorherigen Ansprüche, **dadurch gekennzeichnet, dass** die Verkapselung (11) ein bevorzugt thermoplastisches Kunststoffmaterial, insbesondere Polyethylen, Polypropylen, Polyamid, Polyester oder Polycarbonat aufweist.

13. Latentspeicher (50) mit einem oder mehreren Latentspeicherelementen (10), wobei die Latentspeicherelemente (10) ein in einer Verkapselung (11) angeordnetes Latentspeichermaterial (32) beinhalten, das zumindest eine Phasenwechseltemperatur aufweist, an der ein Phasenwechsel zwischen einer ersten Phase und einer zweiten Phase erfolgt, wobei der Latentspeicher (50) ein die Latentspeicherelemente (10) zumindest teilweise umgebendes Wärmeträgermedium (54) aufweist, wobei der Latentspeicher (50) zumindest einen Anschluss (60) zur Wärmebeladung und zumindest einen Anschluss (60) zur Wärmeentnahme aufweist, **dadurch gekennzeichnet, dass** zumindest ein Latentspeicherelement (10) entsprechend einem der Ansprüche 1 bis 12 ausgebildet ist.

14. Latentspeicher (50) nach Anspruch 13, **dadurch gekennzeichnet, dass** der Latentspeicher (50) zumindest zwei Latentspeicherlemente (10) mit unterschiedlicher Phasenwechseltempertur aufweist.

## Claims

1. Latent storage element (10) with a latent storage material (32), which is arranged in an encapsulation (11) and has at least one phase change temperature at which a phase change takes place between a first phase and a second phase, wherein the encapsulation (11) has an ellipsoid form with a non-circular cross section that decreases towards the edge with an upper side (12) and a lower side (14), **characterised in that** the encapsulation (11) comprises at least one bead (28) at least on one of the upper (12) or lower (14) sides.

2. Latent storage element (10) according to claim 1, **characterised in that** the encapsulation (11) has a disc-shaped form, preferably a lens-like or discus-like form.

3. Latent storage element (10) according to claim 1 or 2, **characterised in that** the encapsulation (11) has at least one recess (22), wherein the recess (22) is preferably formed as an opening, wherein the recess (22) is in particular arranged centrally.

4. Latent storage element (10) according to any one of the preceding claims, **characterised in that** the encapsulation (11) has an indented, preferably concave area (24, 26) at least on one side (12, 14).

5. Latent storage element (10) according to claim 4, **characterised in that** the indented area (24, 26) is arranged centrally.

6. Latent storage element (10) according to claim 4 or 5, **characterised in that** the indented area (24, 26) communicates with the recess (22) according to claim 3.

7. Latent storage element (10) according to any one of the preceding claims, **characterised in that** the bead (28) preferably extends radially and in particular completely between an edge area (20) and a central area (18).

8. Latent storage element (10) according to any one of the preceding claims, **characterised in that** the encapsulation (11) on the upper side (12) and on the lower side (14) comprises at least one bead (28) respectively and the beads (28) of the upper side (12) and the beads (28) of the lower side (14) are arranged offset azimuthally to one another in reference to a plan view of the encapsulation (11).

9. Latent storage element (10) according to any one of the preceding claims, **characterised in that** the encapsulation (11) comprises at least one levelling material (34, 38) in addition to the latent storage material (32).

10. Latent storage element (10) according to claim 9, **characterised in that** the levelling material (34, 38) comprises one or more gases, advantageously air (38), wherein the volume share of the gases (38) is preferably in the range of 1% to 30%, preferably in the range of 5% to 20% and in particular in the range of 10% to 15% of the total volume of the encapsulation (11).

11. Latent storage element (10) according to claim 9 or 10, **characterised in that** the volume share of the levelling material (34, 38) is dimensioned such that the latent storage element (10) has a density in the range from 0.8 to 1.2 g/cm³, preferably 0.9 to 1.1 g/cm³, in particular 0.99 to 1.01 g/cm³ at the phase change temperature, a density in the range of 0.90 to 0.98 g/cm³ for the fully formed first phase above the phase change temperature and a density in the range of 1.02 to 1.1 g/cm³ for the fully formed second phase below the phase change temperature.

12. Latent storage element (10) according to any one of the preceding claims, **characterised in that** the encapsulation (11) comprises a preferably thermoplastic plastic material, in particular polyethylene, polypropylene, polyamide, polyester or polycarbonate.

13. Latent storage (50) with one or more latent storage elements (10), wherein the latent storage elements (10) contain a latent storage material (32) arranged in an encapsulation (11), which material has at least one phase change temperature at which a phase change takes place between a first phase and a second phase, wherein the latent storage (50) comprises a heat transfer medium (54) at least partially surrounding the latent storage elements (10), wherein the latent storage (50) comprises at least one connection (60) for thermal loading and at least one connection (60) for heat extraction, **characterised in that** at least one latent storage element (10) is formed in accordance with one of claims 1 to 12.

14. Latent storage (50) according to claim 13, **characterised in that** the latent storage (50) comprises at least two latent storage elements (10) with a different phase change temperature.

## Revendications

1. Elément accumulateur de chaleur latente (10) avec un matériau accumulateur de chaleur latente (32) disposé dans une encapsulation (11), qui présente au moins une température de changement de phase, à laquelle a lieu un changement de phase entre une première phase et une deuxième phase, dans lequel l'encapsulation (11) présente une forme d'ellipsoïde avec une section transversale, non circulaire, descendant vers le bord, avec un côté supérieur (12) et un côté inférieur (14), **caractérisé en ce que** l'encapsulation (11) présente au moins sur un des côtés, le côté supérieur (12) ou le côté inférieur (14), au moins une nervure (28).

2. Elément accumulateur de chaleur latente (10) selon la revendication 1, **caractérisé en ce que** l'encapsulation (11) présente une forme de disque, de manière préférée une forme de lentille ou similaire à un disque.

3. Elément accumulateur de chaleur latente (10) selon la revendication 1 ou 2, **caractérisé en ce que** l'encapsulation (11) présente au moins un évidement (22), dans lequel l'évidement (22) est réalisé de manière préférée en tant qu'ajour, dans lequel l'évidement (22) est disposé en particulier de manière centrale.

4. Elément accumulateur de chaleur latente (10) selon l'une quelconque des revendications précédentes, **caractérisé en ce que** l'encapsulation (11) présente au moins sur un côté (12, 14) une zone (24, 26) retournée vers l'intérieur, de manière préférée concave.

5. Elément accumulateur de chaleur latente (10) selon la revendication 4, **caractérisé en ce que** la zone retournée vers l'intérieur (24, 26) est disposée de manière centrale.

6. Elément accumulateur de chaleur latente (10) selon la revendication 4 ou 5, **caractérisé en ce que** la zone retournée vers l'intérieur (24, 26) communique avec l'évidement (22) selon la revendication 3.

7. Elément accumulateur de chaleur latente (10) selon l'une quelconque des revendications précédentes, **caractérisé en ce que** la nervure (28) s'étend de manière préférée radialement et en particulier totalement entre une zone de bord (20) et une zone centrale (18).

8. Elément accumulateur de chaleur latente (10) selon l'une quelconque des revendications précédentes, **caractérisé en ce que** l'encapsulation (11) présente sur le côté supérieur (12) et sur le côté inférieur (14) au moins respectivement une nervure (28) et les nervures (28) du côté supérieur (12) et les nervures (28) du côté inférieur (14) sont disposées de manière décalée les unes par rapport aux autres de manière azimutale par rapport à une vue de dessus sur l'encapsulation (11).

9. Elément accumulateur de chaleur latente (10) selon l'une quelconque des revendications précédentes, **caractérisé en ce que** l'encapsulation (11) présente en plus du matériau accumulateur de chaleur latente (32) au moins un matériau de nivellement (34, 38).

10. Elément accumulateur de chaleur latente (10) selon la revendication 9, **caractérisé en ce que** le matériau de nivellement (34, 38) présente un ou plusieurs gaz, de manière avantageuse de l'air (38), dans lequel la fraction volumique des gaz (38) sur le volume total de l'encapsulation (11) se situe de préférence dans la plage de 1 % à 30 %, de manière préférée dans la plage de 5 % à 20 % et en particulier dans la plage de 10 % à 15 %.

11. Elément accumulateur de chaleur latente (10) selon la revendication 9 ou 10, **caractérisé en ce que** la fraction volumique du matériau de nivellement (34, 38) est dimensionnée de telle sorte que l'élément accumulateur de chaleur latente (10) présente une densité dans la plage de 0,8 à 1,2 g/cm³, de manière préférée 0,9 à 1,1 g/cm³, en particulier 0,99 à 1,01 g/cm³ à la température de changement de phase, une densité dans la plage de 0,90 à 0,98 g/cm³ pour la première phase totalement formée au-dessus de la température de changement de phase et une densité dans la plage de 1,02 à 1,1 g/cm³ pour la deuxième phase totalement formée sous la température de changement de phase.

12. Elément accumulateur de chaleur latente (10) selon l'une quelconque des revendications précédentes, **caractérisé en ce que** l'encapsulation (11) présente un matériau synthétique de manière préférée thermoplastique, en particulier du polyéthylène, du polypropylène, du polyamide, du polyester ou du polycarbonate.

13. Accumulateur de chaleur latente (50) avec un ou plusieurs éléments accumulateurs de chaleur latente (10), dans lequel les éléments accumulateurs de chaleur latente (10) contiennent un matériau accumulateur de chaleur latente (32) disposé dans une encapsulation (11), qui présente au moins une température de changement de phase, à laquelle a lieu un changement de phase entre une première phase et une deuxième phase, dans lequel l'accumulateur de chaleur latente (50) présente un milieu caloporteur (54) entourant au moins en partie les éléments accumulateurs de chaleur latente (10), dans lequel l'accumulateur à chaleur latente (50) présente au moins un raccordement (60) pour le chargement de chaleur et au moins un raccordement (60) pour le prélèvement de chargeur, **caractérisé en ce qu'**au moins un élément accumulateur de chaleur latente (10) est réalisé conformément à une quelconque des revendications 1 à 12.

14. Accumulateur de chaleur latente (50) selon la revendication 13, **caractérisé en ce que** l'accumulateur de chaleur latente (50) présente au moins deux éléments accumulateurs de chaleur latente (10) avec une température de changement de phase différente.
